# EUROPEAN PATENT APPLICATION

(11) **EP 2 574 028 A1**
(43) Date of publication of application: **27.03.2013**
(21) Application number: 11782873.1
(22) Date of filing: 16.02.2011
(51) Int. Cl.: H04M 3/51, H04M 3/523

(54) **PROCESSING METHOD AND DEVICE FOR WAITING OVERTIME OF QUEUE REQUEST**

(30) Priority: 17.05.2010 CN 201010184269
(71) Applicant: ZTE Corporation, Shenzhen, Guangdong 518057 (CN)
(72) Inventor: HUANG, Jun, Guangdong 518057 (CN)
(74) Representative: Bongiovanni, Simone
(86) International application number: PCT/CN2011/071026
(87) International publication number: WO 2011/143956

(57) **Abstract**

The present invention discloses a processing method and device for timeout of a queuing request. The method comprises the steps of: after a first queuing request in a waiting queue is timeout, setting the first queuing request to be in a queuing-paused state, and prompting a timeout (S302); obtaining a second queuing request (S304); determining that a call requested, by the second queuing request, to be accessed is the same as a call requested, by the first queuing request, to be accessed (S306); and inserting the second queuing request into the waiting queue (S308). Through the present invention, the original queuing position advantage of a user can be effectively maintained, and the user experience and the system performance can be improved.

## Description

### Field of the Invention

The present invention relates to the field of communications, and in particular to a processing method and device for timeout of a queuing request.

### Background of the Invention

In the related techniques, a Call Centre (CC), also named as a customer service system, is an information system which provides multiple access modes such as telephones, faxes, E-mails and the like for users, so as to process demands, doubts, complaints, suggestions and consultations which are put forward to the enterprises by the users; for example, 1860 in the telecommunication industry and 95555 in the financial industry, and the like. The main function of a Next Generation Call Centre (NGCC) is to search proper agents (telephone operators) for the users, to manage the state of the agents, and to realize various call operations (such as call on hold, consultations, conferences, single step transfer operation and the like), so as to satisfy the various demands that the users and the agents successfully implement communication.

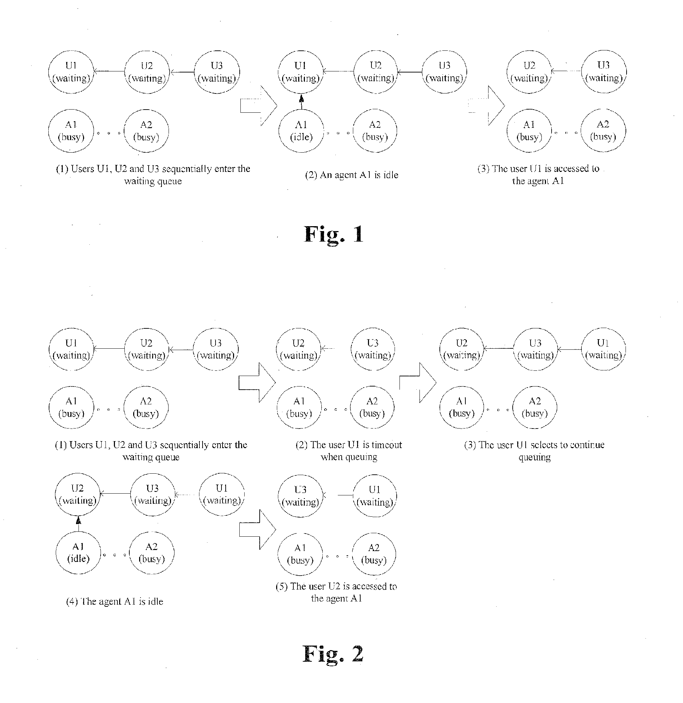

Fig. 1 shows a diagram of a processing method for queuing requests which are waiting according to the related techniques. As shown in Fig. 1, when the call of the user is accessed, a Computer Telephony Integration (CTI) platform selects a most suitable agent according to a series of rules if multiple idle agents which can provide the user service exist currently. If all the current agents are busy (for example, Al and A2), the user enters a queuing waiting state, and a queuing waiting tone is sent to the user; during the waiting period, the user queuing in the front of the queue can be accessed to the agent if a certain agent becomes idle.

Fig. 2 shows a diagram of a processing method for timeout of a queuing request according to the related techniques. As shown in Fig. 2, queuing timeout occurs to the user if the agents are always busy during the waiting period, and now, the user is prompted whether to continue waiting or to hang up as the agents are busy. If the user selects to continue waiting, the user re-enters the queuing waiting state, and now, the user is considered as a new access user by the system to queue at the end of the waiting queue. The user queuing in the front of the queue is selected when there is an idle agent. In view of this, after re-queuing, the user loses the position before the queuing timeout, and thus, the user is more hardly accessed to the agent. This is one of the main reasons that the user can be hardly accessed to the agent when there are not so many agents in the current customer service system.

### Summary of the Invention

The present invention provides a processing solution for timeout of a queuing request, so as to at least solve the above problems.

A processing method for timeout of a queuing request is provided according to one aspect of the present invention.

The processing method for timeout of a queuing request according to the present invention comprises the steps of: after a first queuing request in a waiting queue is timeout, setting the first queuing request to be in a queuing-paused state, and prompting a timeout; obtaining a second queuing request; determining that a call requested, by the second queuing request, to be accessed is the same as a call requested, by the first queuing request, to be accessed; and inserting the second queuing request into the waiting queue.

Preferably, the step of determining that the call requested, by the second queuing request, to be accessed is the same as the call requested, by the first queuing request, to be accessed comprises: judging whether a Dialog Identifier (DialogID) carried in the second queuing request is the same as a DialogID carried in the first queuing request; if yes, determining that the call requested, by the second queuing request, to be accessed is the same as the call requested, by the first queuing request, to be accessed.

Preferably, before the first queuing request in the waiting queue is timeout, the method further comprises: recording a time that the first queuing request enters the waiting queue; and the step of inserting the second queuing request into the waiting queue comprises: inserting the second queuing request into the waiting queue according to the time.

Preferably, the step of inserting the second queuing request into the waiting queue comprises: inserting the second queuing request into a head of the waiting queue.

Preferably, the first queuing request comprises at least one of: a DialogID of the call requested to be accessed, a telephone number of a calling user, duration of timeout of a queuing request, and a mark for indicating that a queuing pausing treatment is required.

Preferably, the step of setting the first queuing request to be in the queuing-paused state after the first queuing request in the waiting queue is timeout comprises: storing the first queuing request in a pausing queue.

A processing device for timeout of a queuing request is provided according to another aspect of the present invention.

The processing device for timeout of a queuing request according to the present invention comprises: a timeout processing module, configured to set a first queuing request to be in a queuing-paused state after the first queuing request in a waiting queue is timeout, and prompt a timeout; an acquisition module, configured to acquire a second queuing request; a determination module, configured to determine that a call requested, by the second queuing request, to be accessed is the same as a call requested, by the first queuing request, to be accessed; and an inserting module, configured to insert the second queuing request into the waiting queue.

Preferably, the determination module comprises: a judgment module, configured to judge whether a DialogID carried in the second queuing request is the same as a DialogID carried in the first queuing request; and the determination module is further configured to determine that the call requested, by the second queuing request, to be accessed is the same as the call requested, by the first queuing request, to be accessed, in the case that the judgment module judges that the DialogID carried in the second queuing request is the same as the DialogID carried in the first queuing request.

Preferably, the device further comprises: a storage module, configured to record a time that the first queuing request enters the waiting queue; and the inserting module is further configured to insert the second queuing request into the waiting queue according to the time in the storage module.

Preferably, the storage module is further configured to store the first queuing request into a pausing queue after the timeout processing module sets the first queuing request to be in the queuing-paused state.

Through the present invention, the problem, that the call is hardly accessed as the waiting position before timeout is lost after a queuing request is timeout in the related techniques, is solved by adopting the mode of inserting the queuing request which is timeout into the waiting queue, therefore the original queuing position advantage of the user is effectively maintained, and the user experience and system performance are improved.

### Brief Description of the Drawings

Drawings, provided for further understanding of the present invention and forming a part of the specification, are used to explain the present invention together with embodiments of the present invention rather than to limit the present invention, wherein:
Fig. 1 shows a diagram of a processing method for queuing requests which are waiting according to the related techniques;
Fig. 2 shows a diagram of a processing method for timeout of a queuing request according to the related techniques;
Fig. 3 shows a flow chart of a processing method for timeout of a queuing request according to an embodiment of the present invention;
Fig. 4 shows a structure diagram of a processing device for timeout of a queuing request according to an embodiment of the present invention;
Fig. 5 shows a structure diagram of a processing device for timeout of a queuing request according to a preferable embodiment of the present invention;
Fig. 6 shows a structure diagram of a processing device for timeout of a queuing request according to Example 1 of the present invention;
Fig. 7 shows a structure diagram of a processing device for timeout of a queuing request according to Example 2 of the present invention; and
Fig. 8 shows a structure diagram of a processing method for timeout of a queuing request according to Example 2 of the present invention.

### Detailed Description of the Embodiments

The present invention is described in details with reference to the drawings and embodiments below. It should be noted that, the embodiments in the application and the characters in the embodiments can be mutually combined if there is no conflict.

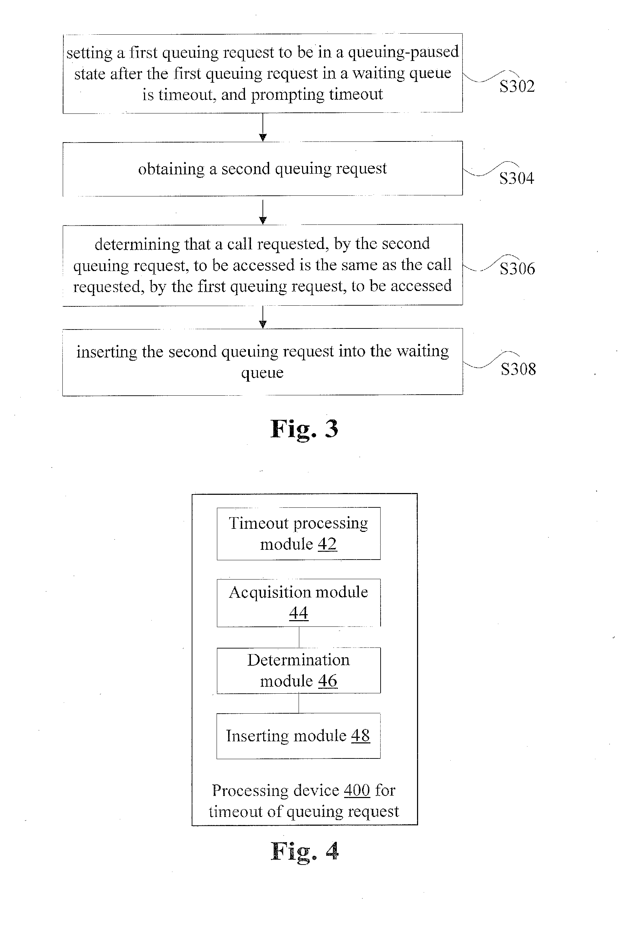

Fig. 3 shows a flow chart of a processing method for timeout of a queuing request according to an embodiment of the present invention. As shown in Fig. 3, the method comprises the steps that:
Step S302, after a first queuing request in a waiting queue is timeout, the first queuing request is set to be in a queuing-paused state, and timeout is prompted;
Step S304, a second queuing request is obtained;
Step S306, it is determined that a call requested, by the second queuing request, to be accessed is the same as a call requested, by the first queuing request, to be accessed;
Step S308, the second queuing request is inserted into the waiting queue.

Through the embodiment of the present invention, the problem, that the call is hardly accessed as the waiting position before timeout is lost after the queuing request is timeout in the related techniques, is solved by adopting the mode of inserting the queuing request which is timeout into the waiting queue, therefore the original queuing position advantage of the user is effectively maintained, and the user experience and system performance are improved.

Preferably, the first queuing request comprises at least one of: a DialogID of the call requested to be accessed, a telephone number of a calling user, duration of the timeout of the queuing request, and a mark for indicating that a queuing pausing treatment is required. For example, the mark in the queuing request is set to be effective when the queuing pausing treatment function in the embodiment of the present invention is needed. This method can improve the processing flexibility and pertinence of the system.

Preferably, the first queuing request can be stored in a pausing queue in the Step S302. This method has simple implementation and high operability.

Preferably, in the Step S306, it is judged whether the DialogID carried in the second queuing request is the same as the DialogID carried in the first queuing request; if the two are the same, it is determined that the call requested, by the second queuing request, to be accessed is the same as the call requested, by the first queuing request, to be accessed. The method effectively realizes that the queuing request which is timeout and enters the queue again can maintain its original position in the queue before the timeout. In addition, the method improves the processing capability of the system.

Preferably, before the Step S302, a time that the first queuing request enters the waiting queue is recorded; in the Step S308, the second queuing request is inserted into the waiting queue according to the time.

The preferable embodiment can make the queuing request which is timeout still maintain the queuing position before the timeout when entering the waiting queue again, therefore the queuing request which waits longer can be more possibly accessed, and the customer satisfaction can be improved.

Preferably, the second queuing request can be inserted into a head of the waiting queue in the Step S308. This method has simple implementation and high efficiency.

Fig. 4 shows a structure diagram of a processing device for timeout of a queuing request according to an embodiment of the present invention. As shown in Fig. 4, the device 400 comprises: a timeout processing module 42, an acquisition module 44, a determination module 46 and an inserting module 48. The structure is described in details below.

The timeout processing module 42 is configured to set a first queuing request to be in a queuing-paused state after the first queuing request in a waiting queue is timeout, and prompt the timeout; the acquisition module 44 is configured to acquire a second queuing request; the determination module 46, which is coupled with the acquisition module 44, is configured to determine that a call requested, by the second queuing request, to be accessed is the same as a call requested, by the first queuing request, to be accessed; the inserting module 48, which is coupled with the determination module 46, is configured to insert the second queuing request into the waiting queue.

Through the embodiment of the present invention, the problem, that the call is hardly accessed as the waiting position before timeout is lost after the queuing request is timeout in the related techniques, is solved by adopting the mode of inserting the queuing request which is timeout into the waiting queue, therefore the original queuing position advantage of the user is effectively maintained, and the user experience and system performance are improved.

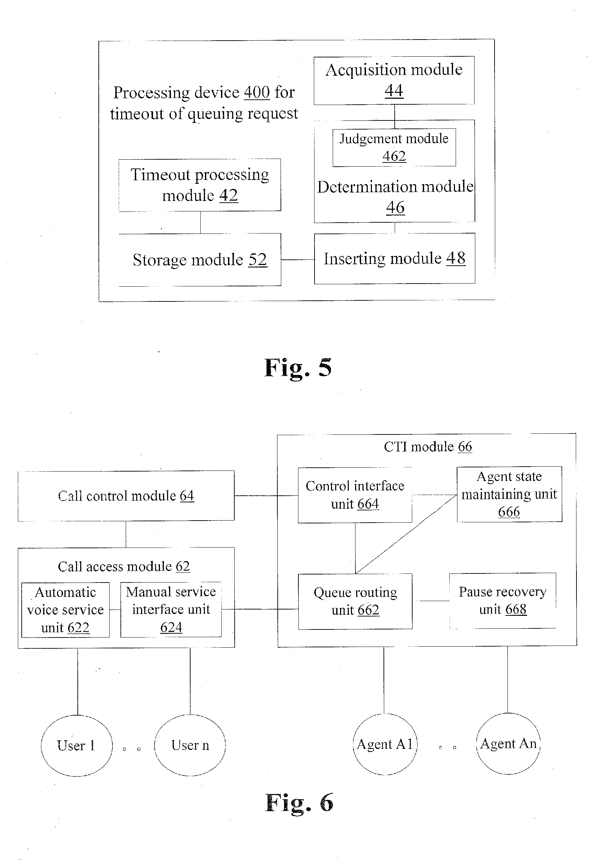

Fig. 5 shows a structure diagram of a processing device for timeout of a queuing request according to a preferable embodiment of the present invention. As shown in Fig. 5, the device 400 further comprises: a storage module 52, which is coupled with the timeout processing module 42 and the inserting module 48, and is configured to record a time that the first queuing request enters the waiting queue; the inserting module 48 is further configured to insert the second queuing request into the waiting queue according to the time in the storage module 52.

Preferably, the determination module 46 comprises: a judgment module 462, configured to judge whether a DialogID carried in the second queuing request is the same as a DialogID carried in the first queuing request; the determination module 46 is further configured to determine that the call requested, by the second queuing request, to be accessed is the same as the call requested, by the first queuing request, to be accessed, in the case that the judgment module 462 judges that the DialogID carried in the second queuing request is the same as the DialogID carried in the first queuing request. In this way, the queuing request which is timeout and enters the queue again can maintain the original position in the queue before the timeout, and the processing capability of the system can be improved.

Preferably, the storage module 52 is further configured to store the first queuing request into a pausing queue after the timeout processing module 42 sets the first queuing request to be in a queuing-paused state.

The preferable embodiment can make the queuing request which is timeout still maintain the original queuing position before the timeout when entering the waiting queue again, therefore the queuing request which waits longer can be more possibly accessed, and the customer satisfaction can be improved.

The implementation process of the embodiments of the present invention is described in details with reference to the embodiments below.

### Example 1

Fig. 6 shows a structure diagram of a processing device for timeout of a queuing request according to Example 1 of the present invention. As shown in Fig. 6, the device comprises: a call access module 62, a call control module 64 and a Computer Telephone Integration (CTI) module 66; the structure is described in details below.

The call access module 62 comprises an automatic voice service unit 622 and a manual service queuing interface unit 624, wherein the automatic voice service unit 622 is configured to automatically implement voice interaction with the user; the manual service interface unit 624 is configured to initiate a queuing request to a CTI platform and process the queuing result of the CTI platform.

The call control module 64 is coupled with the call access module 62, and is configured to realize various call operations.

The CTI module 66 is coupled with the call access module 62 and the call control module 64, and comprises: a queue routing unit 662, a control interface unit 664, an agent state maintaining unit 666 and a pause recovery unit 668.

The queue routing unit 662 is configured to find a proper agent for the user when the user calls, and find a proper user for the agent when the agent is idle. The control interface unit 664 is configured to realize various call operations (such as call handoff, conferences and the like) together with the call control module 64. The agent state maintaining unit 666 is configured to maintain the states of all the currently-online agents. The pause recovery unit 668 is configured to pause after the user is timeout for queuing, and recover queuing when the user continues waiting.

N agents (which are coupled with the CTI module 66) can be contained during the specific implementation process, for providing a platform for the telephone operators to interact with the users.

The processing method for timeout of a queuing request (namely, queue pausing recovery function) in the preferable embodiment can comprise the steps as follows.

Step 1: After the automatic voice service unit 622 of the call access module 62 completes the interaction flow, such as playback, number receiving and the like, with the user, the user selects to talk to one of the telephone operators.

Step 2: The manual service interface unit 624 of the call access module 62 generates a queuing request, and sends the queuing request to the CTI module 66. The queuing request comprises: a current DialogID, the telephone number of the user, the duration of the timeout of the queuing request, a mark for indicating whether to start the queuing pausing function and the like.

Step 3: After receiving the queuing request, the queue routing unit 662 of the CTI module 66 searches for an idle agent which can process this service currently. If the proper agent is found, the queue routing unit 662 notifies the agent state maintaining unit 666 to lock the agent, and returns the telephone number of the agent to the manual service interface unit 624 of the call access module 62; the following flow that the user accesses the agent is not described in details here. If no proper agent is found, the queuing request enters a waiting queue, and the time that the queuing request firstly enters the waiting queue is recorded.

Step 4: The queuing request is not selected by an idle agent during the period that the queuing request is in the waiting queue, and the queuing request is timeout. If the queuing pausing function is not started after the queuing request is timeout, return a queuing result that the queuing request is timeout to the manual service interface unit 624 of the call access module 62, and end queuing. If the queuing pausing function is started, the pause recovery unit 668 of the CTI module 66 can put the queuing request into the pausing queue, and return a queuing result that the queuing request is paused to the manual service interface unit 624 of the call access module 62.

Step 5: After receiving the queuing result that the queuing request is paused, the manual service interface unit 624 of the call access module 62 prompts the user that "all agents are busy, please press * to continue waiting, or please hang up to finish", and the like.

Step 6: If the user selects to continue waiting, the manual service interface unit 624 of the call access module 62 regenerates a queuing request by using the same DialogID, and sends the queuing request to the CTI module 66. After the CTI module 66 receives the queuing request, as the queuing request has been paused, the pause recovery unit 668 of the CTI module 66 finds out the queuing request from the pausing queue according to the DialogID, inserts the queuing request into the current waiting queue according to the time that the queuing request firstly enters the waiting queue, namely, the queuing request is recovered.

During the specific implementation process, if the user selects to hang up, the manual service interface unit 624 of the call access module 62 can generate a queuing canceling request (which can comprise the current DialogID, the telephone number of the user, and the like), and send the queuing canceling request to the CTI module 66. After receiving the queuing canceling request, the queue routing unit 662 of the CTI module 66 deletes the queuing request from the pausing queue according to the DialogID.

It should be noted that, the situations, that the queuing request is selected by an idle agent during the period that the queuing request is in the waiting queue, or the queuing request is paused again due to repeated queuing timeout, or the user hangs up to end the queuing request, and the like, are not described again here. In addition, when turning to be an idle state from a non-idle state, an agent only can select the user in the waiting queue, but not select the user in the pausing queue.

It can be seen that, the preferable embodiment can effectively maintain the original queuing position advantage of the user, so as to guarantee the chance that the user can be preferentially accessed to the agent when repeatedly queuing, so as to relive the problem that the user can be hardly accessed to the agent in the case that the agent resource in the NGCC system is relatively lack, and to improve the customer satisfaction.

### Example 2

The preferable embodiment of the present invention is described in details by taking two different selections of the user after the queuing request of the user is paused (namely, the queuing request is timeout) as an example.

Selection 1: the user selects to continue waiting after the queuing request of the user is paused.

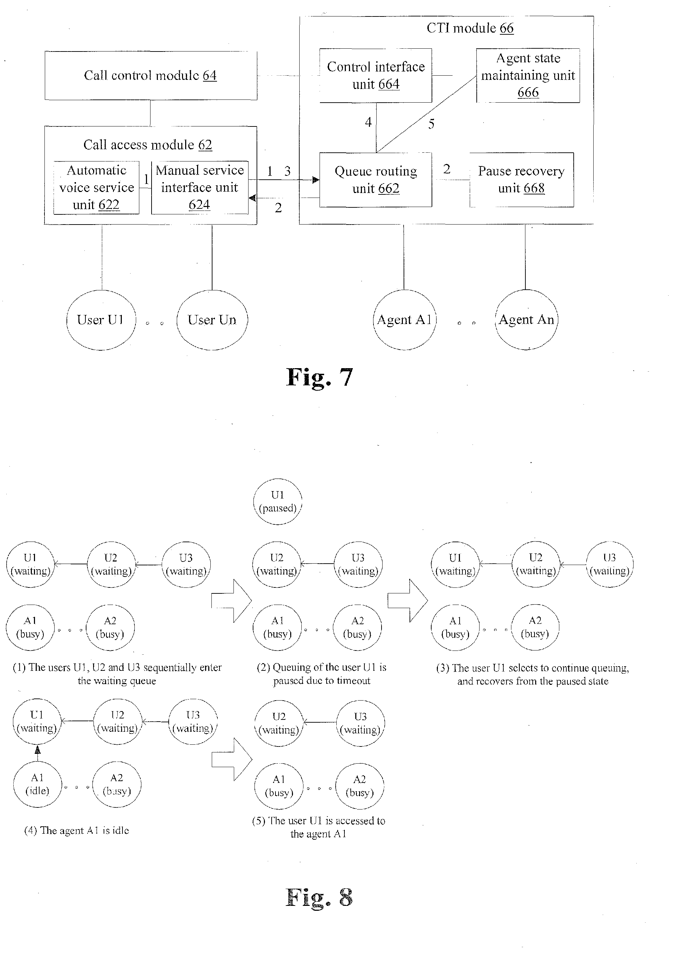

Fig. 7 shows a structure diagram of a processing device for timeout of a queuing request according to Example 2 of the present invention. Fig. 8 shows a structure diagram of a processing method for timeout of a queuing request according to Example 2 of the present invention. As shown in Fig. 7 and Fig. 8, the method comprises the steps as follows.

Step 1: The user U1 initiates to talk to one of the telephone operators; the manual service interface unit 624 of the call access module 62 initiates a queuing request to the CTI module 66. As all the agents are busy, the user U1 enters the waiting queue, and the current time is t1. The user U2 initiates to talk to one of the telephone operators; the manual service interface unit 624 of the call access module 62 initiates a queuing request to the CTI module 66. As all the agents are busy, the user U2 enters the waiting queue, and the current time is t2, wherein the user U2 queues behind the user U1 in the queue. The user U3 initiates to talk to one of the telephone operators, and similarly, the user U3 queues behind the user U2 in the queue.

Step 2: The user U1 is timeout when queuing, the pause recovery unit 668 of the CTI module 66 transfers the user U1 from the waiting queue to the pausing queue, and returns the queuing pause to the manual service interface unit 624 of the call access module 62; the call access module 62 prompts the user that all the agents are busy. During the specific implementation process, the call access module 62 can prompt the calling user that the line is busy and/or whether to keep waiting by adopting voice or image modes.

Step 3: The user U1 selects to continue waiting, the manual service interface unit 624 of the call access module 62 initiates a queuing request (with the same DialogID and a mark for indicating that the queuing request has been paused) to the CTI module 66. After the CTI module 66 receives the queuing request, as the queuing request has been paused, the pause recovery unit 668 of the CTI module 66 finds out this queuing request from the pausing queue according to the DialogID, and inserts the queuing request into the current waiting queue according to the time t1 that the request firstly enters the waiting queue, namely, still queuing before the user U2.

Step 4: When a certain agent Al is idle, the user queuing in the front is preferentially selected from the waiting queue and the user U1 is selected.

Step 5: The user U1 is accessed to the agent A1, and the user U2 and the user U3 in the waiting queue continue waiting for the idle agents.

Selection 2: the user selects to hang up after the queuing request of the user is paused.

Step 1: The user initiates to talk to one of the telephone operators, the manual service interface unit 624 of the call access module 62 initiates a queuing request to the CTI module 66. As all the agents are busy, the user U1 enters the waiting queue, and the current time is t1.

Step 2: The user U1 is timeout when queuing, the pause recovery unit 668 of the CTI module 66 transfers the user U1 from the waiting queue to the pausing queue, and returns the queuing pause to the manual service interface unit 624 of the call access module 62; the call access module 62 prompts the user that all the agents are busy.

Step 3: The user selects to hang up, the manual service interface unit 624 of the call access module 62 initiates a queuing canceling request (with the same DialogID and a mark for indicating that the queuing request has been paused) to the CTI module 66. After the CTI module 66 receives the queuing canceling request, as the queuing request has been paused, the pause recovery unit 668 of the CTI module 66 can find out this queuing request from the pausing queue according to the DialogID, and deletes the queuing request.

It can be seen that, this preferable embodiment can overcome the disadvantage that the user loses the original queuing position advantage after the queuing request is timeout in the customer service system, therefore, the chance that the user is preferentially selected by the agent is increased in the case that the user selects to continue waiting.

In conclusion, through the queuing pausing mechanism of the embodiments of the present invention, the problem, that the call can be hardly accessed as the waiting position before timeout is lost after the queuing request is timeout in the related techniques, can be solved; the original queuing position advantage of the user can be effectively maintained, and the user experience and system performance can be improved.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A processing method for timeout of a queuing request, **characterized by** comprising:
after a first queuing request in a waiting queue is timeout, setting the first queuing request to be in a queuing-paused state, and prompting a timeout;
obtaining a second queuing request;
determining that a call requested, by the second queuing request, to be accessed is the same as a call requested, by the first queuing request, to be accessed; and
inserting the second queuing request into the waiting queue.

2. The method according to claim 1, **characterized in that** the step of determining that the call requested, by the second queuing request, to be accessed is the same as the call requested, by the first queuing request, to be accessed comprises:
judging whether a Dialog Identifier (DialogID) carried in the second queuing request is the same as a DialogID carried in the first queuing request;
if yes, determining that the call requested, by the second queuing request, to be accessed is the same as the call requested, by the first queuing request, to be accessed.

3. The method according to claim 2, **characterized in that**
before the first queuing request in the waiting queue is timeout, the method further comprises: recording a time that the first queuing request enters the waiting queue; and
the step of inserting the second queuing request into the waiting queue comprises:
inserting the second queuing request into the waiting queue according to the time.

4. The method according to claim 2, **characterized in that** the step of inserting the second queuing request into the waiting queue comprises: inserting the second queuing request into a head of the waiting queue.

5. The method according to any one of claims 1 to 4, **characterized in that** the first queuing request comprises at least one of: a DialogID of the call requested to be accessed, a telephone number of a calling user, duration of timeout of a queuing request, and a mark for indicating that a queuing pausing treatment is required.

6. The method according to claim 5, **characterized in that** the step of setting the first queuing request to be in the queuing-paused state after the first queuing request in the waiting queue is timeout comprises: storing the first queuing request in a pausing queue.

7. A processing device for timeout of a queuing request, **characterized by** comprising:
a timeout processing module, configured to set a first queuing request to be in a queuing-paused state after the first queuing request in a waiting queue is timeout, and prompt a timeout;
an acquisition module, configured to acquire a second queuing request;
a determination module, configured to determine that a call requested, by the second queuing request, to be accessed is the same as a call requested, by the first queuing request, to be accessed; and
an inserting module, configured to insert the second queuing request into the waiting queue.

8. The device according to claim 7, **characterized in that**
the determination module comprises: a judgement module, configured to judge whether a DialogID carried in the second queuing request is the same as a DialogID carried in the first queuing request; and
the determination module is further configured to determine that the call requested, by the second queuing request, to be accessed is the same as the call requested, by the first queuing request, to be accessed, in the case that the judgment module judges that the DialogID carried in the second queuing request is the same as the DialogID carried in the first queuing request.

9. The device according to claim 8, **characterized in that**
the device further comprises: a storage module, configured to record a time that the first queuing request enters the waiting queue; and
the inserting module is further configured to insert the second queuing request into the waiting queue according to the time in the storage module.

10. The device according to any one of claims 7 to 9, **characterized in that** the storage module is further configured to store the first queuing request into a pausing queue after the timeout processing module sets the first queuing request to be in the queuing-paused state.
